# EUROPÄISCHE PATENTANMELDUNG

(11) **EP 2 441 932 A2**
(43) Veröffentlichungstag der Anmeldung: **18.04.2012**
(21) Anmeldenummer: 11182278.9
(22) Anmeldetag: 22.09.2011
(51) Int. Cl.: F01N 9/00, F01N 3/029

(54) **Verfahren zum Absenken der Rußzündtemperatur von auf einem Partikelfilter akkumuliertem Ruß**

(30) Priorität: 13.10.2010 DE 102010038143
(71) Anmelder: HJS Emission Technology GmbH & Co. KG, 58706 Menden (DE)
(72) Erfinder: Margraf, Jan, 44135 Dortmund (DE); Schrewe, Klaus, 59602 Rüthen (DE); Steigert, Simon, 58706 Menden (DE)
(74) Vertreter: Haverkamp, Jens

(57) **Zusammenfassung**

Beschrieben ist ein Verfahren zum Absenken der Zündtemperatur des auf einem in den Abgasstrang 1 einer Brennkraftmaschine eingeschalteten Partikelfilters 2 akkumulierten Rußes. Bei diesem Verfahren wird ein Precursor eines die Oxidationstemperatur von Ruß herabsetzenden Katalysators in den Abgasstrang 1 eingebracht, und zwar der Brennkraftmaschine nachgeschaltet und stromauf des Partikelfilters 2. Der in den Abgasstrang 1 eingebrachte Precursor wird innerhalb des Abgasstranges 1 in seine Gasphase überführt, bevor dieser den auf dem Partikelfilter 2 akkumulierten Ruß beaufschlagt. Der gasförmige Katalysator-Precursor wird von dem auf dem Partikelfilter 2 akkumulierten Ruß adsorbiert. Anschließend wird aus dem in seiner Gasphase befindlichen Precursor in Reaktion mit zumindest einem im Abgasstrom enthaltenen weiteren gasförmigen Bestandteil der für die Herabsetzung der Zündtemperatur verantwortliche Katalysator gebildet.

## Beschreibung

Die Erfindung betrifft ein Verfahren zum Absenken der Zündtemperatur von auf einem in dem Abgasstrang einer Brennkraftmaschine eingeschalteten Partikelfilter akkumuliertem Ruß, bei welchem Verfahren ein Precursor eines die Zündtemperatur von Ruß herabsetzenden Katalysators der Brennkraftmaschine nachgeschaltet stromauf des Partikelfilters in den Abgasstrang eingebracht wird.

Zum Reinigen der von einer Brennkraftmaschine, etwa eines Dieselmotors, ausgestoßenen Abgase ist es mitunter erforderlich, dass das Abgas bzw. das Abgasreinigungsaggregat eine bestimmte Mindesttemperatur aufweisen muss. Um einen solchen Abgasnachbehandlungsvorgang auch dann durchführen zu können, wenn das Abgas und damit das Abgasreinigungsaggregat noch nicht die Mindesttemperatur aufweist, wird mitunter das Abgas durch zusätzliche Maßnahmen, etwa durch Einschaltung eines Abgasbrenners erwärmt.

Dieselbrennkraftmaschinen sind zum Reduzieren von schädlichen Emissionen mit Abgasreinigungsanlagen ausgerüstet. Das von einer solchen Dieselbrennkraftmaschine ausgestoßene Abgas wird zu diesem Zweck durch eine solche Abgasreinigungsanlage geleitet. Die Abgasreinigungsanlage umfasst einen Abgasstrang, in dem ein oder mehrere Abgasreinigungsaggregate eingeschaltet sind. Zum Entfernen von im Abgas mitgeführtem Ruß kann in den Abgasstrang ein Partikelfilter eingeschaltet sein. Auf der anströmseitigen Oberfläche des Partikelfilters akkumuliert der im Abgas mitgeführte Ruß. Damit im Zuge der sukzessiven Rußakkumulation der Abgasgegendruck nicht zu weit ansteigt und der Filter verstopft, wird bei ausreichender Rußbeladung des Filters ein Rußabbrand herbeigeführt. Nach Abschluss des Rußabbrandes ist der Partikelfilter regeneriert. Zurück bleibt ein nicht verbrennbarer Ascherest. Damit ein solcher Rußabbrand stattfinden kann, muss der Ruß eine gewisse Temperatur aufweisen - die sogenannte Rußzündtemperatur. Da je nach Betrieb der Dieselbrennkraftmaschine die notwendige Temperatur zum Auslösen eines Rußabbrandes durch das anströmende Abgas nicht immer erreicht wird, ist es in solchen Fällen erforderlich, zusätzliche Maßnahmen zum Auslösen eines Regenerationsprozesses zu ergreifen. Dieses kann durch Erwärmen des Filterkörpers bzw. seiner anströmseitigen Oberfläche mit Hilfe von elektrischen Heizelementen oder durch Erwärmen des den Filter anströmenden Abgases durch Einsatz von Brennern und/oder von Oxidationskatalysatoren, die zum Erhöhen der Abgastemperatur mit Kraftstoff beaufschlagt werden, erfolgen.

Neben oder zusätzlich zu solchen Maßnahmen sind Verfahren bekannt geworden, bei denen die Rußzündtemperatur durch Zuführen eines Katalysators herabgesetzt wird. Derartige Katalysatoren kommen in Form eines Additivs mit einem Precursor des Katalysators zum Einsatz. Derartige Additive werden typischerweise dem Kraftstoff beigemengt. Mit dem Kraftstoff wird das Additiv der Brennkraftmaschine zugeführt und darin umgesetzt, wobei im Zuge des Verbrennungsprozesses aus dem Precursor der Katalysator gebildet wird, der sich an dem gleichzeitig gebildeten Ruß anlagert und mit diesem den Abgasstrang durchströmt, bis die Rußpartikel von einem Partikelfilter aufgefangen werden. Als Additiv wird in vielen Fällen Ferrocen eingesetzt. Neben einem Zuführen von Ferrocen als Additiv und dem sich im Zuge der Umsetzung im Verbrennungsmotor daraus bildenden Eisenoxid FeₓO_{y}**,** beispielsweise F₂O₃ ist aus EP 0 543 477 B1 bekannt geworden, Ferrocen gasförmig dem Verbrennungsraum der Brennkraftmaschine zuzuführen. Bei diesen vorbekannten Verfahren erfolgt eine Bildung des Katalysators ebenfalls zusammen mit der Bildung des Rußes bei dem Prozess der Verbrennung des Kraftstoffes durch die Brennkraftmaschine. Bei beiden vorbeschriebenen Verfahren weist der aus der Brennkraftmaschine ausgestoßene Ruß bereits eine erniedrigte Zündtemperatur auf. Dementsprechend weist der an einem in dem Abgasstrang eingeschalteten Partikelfilter akkumulierte Ruß innerhalb des gesamten Filterkuchens eine erniedrigte Zündtemperatur auf.

Nachteilig bei einer Zuführung des Katalysators an Ruß durch Umsetzen des Katalysator-Precursors im Motorraum der Brennkraftmaschine ist, dass das in den Verbrennungsraum eingebrachte Additiv sich mitunter nachteilig bei der Einspritzung bzw. bei den für die Kraftstoffeinspritzung verwendeten Aggregaten bemerkbar macht. Vor diesem Hintergrund sind Verfahren entwickelt worden, bei denen der Katalysator-Precursor der Brennkraftmaschine nachgeschaltet in den Abgasstrang eingebracht wird. Ein solches Verfahren ist beispielsweise aus EP 1 741 886 A1 bekannt. Bei diesem Verfahren wird ein gelöstes Metallkolloid als Katalysator-Precursor in den Abgasstrang eingedüst mit dem Zweck, dass das Lösungsmittel verdampft und anschließend der darin enthaltene Katalysator sich an den im Abgasstrom mitströmenden Rußpartikeln anlagert, bevor diese auf der Oberfläche des Partikelfilters aus dem Abgasstrom abgeschieden werden. Neben diesem vorbekannten Verfahren ist ebenfalls bekannt, in den Abgasstrang einen Katalysator-Precursor einzubringen, damit dieser in Kontakt mit bereits auf den Partikelfilter befindlichem Ruß gelangt. Auch bei diesem Verfahren werden in Lösungen befindliche Metallkolloide als Katalysator-Precursor verwendet. Nachteilig bei diesen Verfahren ist, dass ein Zuführen des Katalysator-Precursors kontinuierlich oder quasi kontinuierlich erfolgen muss, damit die Gesamtmenge des auf den Partikelfilter akkumulierten Rußes eine herabgesetzte Zündtemperatur aufweist. Zwar ist in EP 1 741 886 A1 auch auf einen diskontinuierlichen Betrieb des Zuführens des Katalysator-Precursors hingewiesen. Allerdings ist ein solcher Betrieb, wie in diesem Dokument ausgeführt, nur möglich, wenn ein Wechsel zwischen Betriebszuständen der Brennkraftmaschine mit höherer Last und niedriger oder keiner Last erfolgt oder überhaupt möglich sind. Wird die Brennkraftmaschine in solchen hinsichtlich ihrer Last sehr unterschiedlichen Zuständen betrieben, dann wird der Katalysator-Precursor nur im Lastbereich zugeführt vor dem Hintergrund, dass dann die wesentliche, auf dem Filter zu akkumulierende Rußmenge gebildet wird.

Naturgemäß ist man bestrebt, die Menge des zuzuführenden Additivs (Katalysators bzw. Katalysator-Precursors), das für die genannten Zwecke verwendet wird, möglichst gering zu halten. Da die zuzuführenden Katalysator-Precursormengen ohnehin recht gering sind, stellt es einen nicht unerheblichen Aufwand dar, den Katalysator-Precursor hinreichend genau und nicht mit einem zu großen Überschuss zu dosieren, wobei diesbezüglich zu berücksichtigen ist, dass ein Dosieren in heißem Milieu erfolgt.

Ausgehend von diesem diskutierten Stand der Technik liegt der Erfindung daher die Aufgabe zugrunde, ein eingangs genanntes Verfahren dergestalt weiterzubilden, dass nicht nur eine Dosierung eines Katalysator-Precursors in den Abgasstrang hinein vereinfacht ist, sondern dass zudem Sorge dafür getragen ist, dass der gesamte oder zumindest jedoch der überwiegende Anteil des auf einem Partikelfilter akkumulierten Rußes eine durch den Katalysator herabgesetzte Zündtemperatur aufweist.

Gelöst wird diese Aufgabe erfindungsgemäß durch ein eingangs genanntes, gattungsgemäßes Verfahren, bei dem der in dem Abgasstrang eingebrachte Precursor innerhalb des Abgasstranges in seine Gasphase überführt wird, und zwar bevor dieser den auf dem Partikelfilter akkumulierten Ruß beaufschlagt, welcher gasförmige Katalysator-Precursor von dem auf den Partikelfilter akkumulierten Ruß adsorbiert und aus welchem Katalysator-Precursor anschließend in Reaktion mit zumindest einem im Abgasstrom enthaltenen, weiteren gasförmigen Bestandteil der für die Herabsetzung der Zündtemperatur verantwortliche Katalysator gebildet wird.

Bei diesem Verfahren wird im Unterschied zu vorbekannten Verfahren der Katalysator aus einem in seiner Gasphase befindlichen Katalysator-Precursor gebildet. Die Bildung des Katalysators erfolgt unter Beteiligung wenigstens eines weiteren, gasförmigen, im Abgasstrom enthaltenen Bestandteils. Diese Reaktion zum Bilden des Katalysators erfolgt im bzw. am Ruß, und somit *in situ,* also: unmittelbar an demjenigen Ort, wo der Katalysator benötigt wird. Ausgenutzt werden bei dem vorbeschriebenen Konzept zum einen die adsorbierenden Eigenschaften des auf dem Partikelfilter akkumulierten Rußes, der Adsorptionseigenschaften wie Aktivkohle hat. Der gasförmige Katalysator-Precursor wird von dem Ruß aufgrund seiner vorbeschriebenen Eigenschaften adsorbiert. Durch Verbinden mit zumindest einem weiteren, im Abgasstrom enthaltenen gasförmigen Bestandteil bildet sich sodann aus den akkumulierten gasförmigen Katalysator-Precursor der für die Absenkung der Zündtemperatur benötigte Katalysator. Des Weiteren wird die gasförmige Eigenschaft des Katalysator-Precursors für die Verteilung desselben innerhalb des auf dem Partikelfilter akkumulierten Rußes ausgenutzt. Aufgrund seines gasförmigen Aggregatzustandes dringt dieser in die Rußschicht ein und kann auf diese Weise dem gesamten Ruß zugeführt werden. Es wird angenommen, dass hiermit zum ersten Mal das aktive Durchdringen eines Rußkuchens durch einen Katalysator-Precursor beschrieben ist. Im Unterschied zu vorbekannten Verfahren, bei denen eine kontinuierliche Ablagerung des Katalysators zusammen mit den Rußpartikeln auf der anströmseitigen Oberfläche des Partikelfilters erfolgt, ist es beim Gegenstand des beanspruchten Verfahrens daher möglich, dieses diskontinuierlich zu betreiben. Aufgrund der vorbeschriebenen Eigenschaften des beanspruchten Verfahrens ist es möglich, Katalysator-Precursor in den Abgasstrang nur dann einzubringen, wenn eine Partikelfilterregeneration ausgelöst werden soll. Dieses hat nicht nur Vorteile in der Dosierung, wie dieses nachstehend beschrieben ist, sondern auch in einer Überwachung bzw. Kontrolle einer Partikelfilterregeneration. Da bei einem solchen Betrieb die Rußzündtemperatur erst unmittelbar vor einem Regenerationsprozess abgesenkt wird, ist hiermit auch der Zeitpunkt einer Partikelfilterregeneration besser bestimmt und unbeabsichtigte Regenerationsprozesse vermieden. Dieses gilt vor allem dann, wenn eine Rußoxidation und somit ein Rußabbrand vermieden werden soll, wenn die akkumulierte Rußmenge noch nicht hinreichend groß ist, um einen möglichst optimalen Rußabbrand herbeizuführen.

Der Katalysator-Precursor wird der Brennkraftmaschine nachgeschaltet und dem Partikelfilter vorgeschaltet in den Abgasstrang eingebracht. Genutzt wird der Umstand, dass der Katalysator-Precursor sich eine gewisse Verweildauer im Abgasstrang befindet und im Zuge dieses Verweilens dieser seinen Aggregatzustand in die Gasphase ändert. Vor dem Hintergrund, dass der zugeführte gasförmige Katalysator-Precursor in Folge der Durchströmbarkeit des auf den Partikelfilter akkumulierten Rußkuchens an sämtliche oder zumindest so gut wie alle Rußpartikel herangeführt wird, die diesen sodann adsorbieren, ist es nicht erforderlich, dass die Rußpartikel bereits bei dem Prozess des Abscheidens derselben aus dem Abgasstrom eine erniedrigte Zündtemperatur aufweisen. Vielmehr kann bei diesem Verfahren der Katalysator-Precursor diskontinuierlich zugeführt werden, und zwar typischerweise im Zusammenhang mit einem Regenerationsprozess zum Regenerieren des Partikelfilters. Zugeführt wird der Katalysator-Precursor mit einem gewissen zeitlichen Vorlauf, bevor der eigentliche Regenerationsprozess gestartet bzw. ausgelöst wird. Der zeitliche Vorlauf ist so bemessen, dass hinreichend Zeit gegeben ist, dass sich aus dem von den Rußpartikeln adsorbierten gasförmigen Katalysator-Precursor der Katalysator gebildet hat. Diese Reaktion kann mehrere Minuten in Anspruch nehmen.

Es versteht sich, dass bei einem solchermaßen diskontinuierlichen Betrieb des Zuführens des Katalysator-Precursors die zu dosierende Menge um Potenzen höher ist, verglichen mit einer Dosierung, wenn der Katalysator-Precursor während des gesamten Betriebes der Brennkraftmaschine kontinuierlich dem Abgasstrang zugeführt werden muss. Ein Beispiel vermag dieses zu verdeutlichen: Wird eine Katalysator-Precursormenge von 60 ml als Gesamtmenge zum Bereitstellen einer hinreichenden Katalysatormenge für die gewünschte Erniedrigung der Zündtemperatur des auf einen Partikelfilter akkumulierten Rußes benötigt, wird bei dem beanspruchten Verfahren, dem Regenerationsprozess beispielsweise für etwa 10 Minuten vorgeschaltet, 6 ml des Katalysator-Precursors pro Minute in den Abgasstrang eingegeben. Bei diesem Beispiel entspricht die auf dem Partikelfilter akkumulierte Rußmenge derjenigen Rußmenge, die bei einem Betrieb der Brennkraftmaschine über 20 Stunden akkumuliert worden ist. Bei herkömmlichen Verfahren müsste dieselbe Katalysator-Precursormenge kontinuierlich über die 20 Stunden Betriebsdauer mit einer Dosierrate von 0,05 ml/min in den Abgasstrang eingebracht werden.

Vorteilhaft lässt sich das Verfahren durchführen, wenn als Katalysator ein Metalloxid, beispielsweise ein Eisenoxid für die Zwecke des Herabsetzens der Zündtemperatur von Ruß verwendet wird. Als Katalysator-Precursor zum Ausbilden eines Eisenoxids als Katalysator eignet sich Ferrocen, welches typischerweise in gelöster Form in den Abgasstrang eingebracht wird. Auf Grund der im Abgasstrang bei einem Betrieb der Brennkraftmaschine typischerweise herrschenden Temperatur verdampft das Lösungsmittel rasch. Als Lösungsmittel kann beispielsweise Toluol eingesetzt werden. Das nach Verdampfen des Lösungsmittels in fester Form vorliegende Ferrocen geht anschließend in seine Gasphase über. Bei einem Einsatz von Ferrocen wird dieser Prozess durch den relativ hohen Dampfdruck von Ferrocen unterstützt, sodass das zunächst in fester Form vorliegende Ferrocen bereits nach relativ kurzer Strömungsstrecke im Abgasstrang seinen Aggregatzustand in die Gasphase gewechselt hat. Als weiterer gasförmiger Bestandteil zum Ausbilden des gewünschten Eisenoxid-Katalysators wird im Abgasstrom enthaltener Sauerstoff verwendet. Untersuchungen haben gezeigt, dass bei einem Einsatz von Ferrocen als Katalysator-Precursor dieses in seiner gasförmigen Phase sehr effektiv von dem auf den Partikelfilter akkumulierten Ruß adsorbiert wird, vor allem bevor das gasförmige Ferrocen zusammen mit Sauerstoff zur Ausbildung des Eisenoxid-Katalysators reagiert hat. Verzögert wird die Reaktion durch den typischerweise relativ geringen Sauerstoffgehalt im Abgasstrom. Diese Verzögerung wird bei dem Verfahren genutzt, damit sichergestellt ist, dass vor der eigentlichen Bildung des Katalysators hinreichend Ferrocen als Gasphase von den Rußpartikeln adsorbiert worden ist. Selbstverständlich geht der Prozess des Bildens des Katalysators aus dem in Gasphase befindlichen Katalysator-Precursor Hand in Hand mit dem Zuführen des Katalysator-Precursors.

Die Beschreibung des Verfahrens macht deutlich, dass trotz des kontinuierlichen Zuführens eines Katalysator-Precursors sichergestellt ist, dass der von einem Partikelfilter akkumulierte Ruß insgesamt oder zumindest in hinreichender Menge hinsichtlich seiner Zündtemperatur herabgesenkt ist, um eine kontrollierte und vollständige Regeneration (Rußabbrand) durchführen zu können.

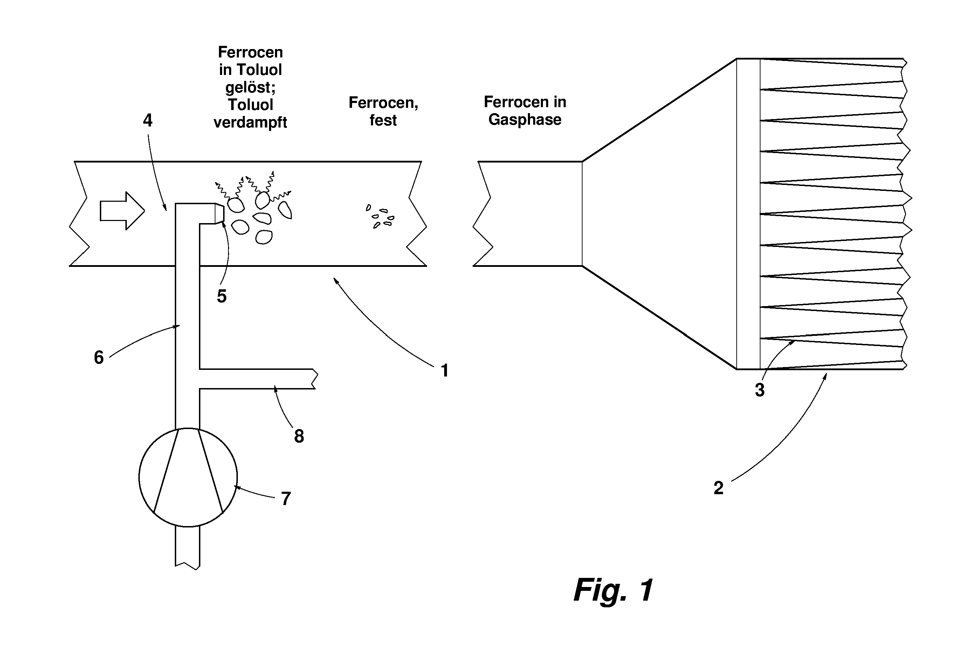

Weitere Vorteile und Ausgestaltungen der Erfindung ergeben sich aus der nachfolgenden Beschreibung eines Ausführungsbeispiels unter Bezugnahme auf die beigefügte **Figur 1.** Figur 1 zeigt in einer Darstellung nach Art eines Blockschaltbildes einen in den Abgasstrang 1 eines in Figur 1 als Brennkraftmaschine nicht dargestellten Dieselmotors eingeschalteten Partikelfilter 2. Der Partikelfilter 2 besteht bei dem dargestellten Ausführungsbeispiel aus einer Vielzahl von Filtertaschen aus Sintermetall. Eine Filtertasche ist in der Figur mit dem Bezugszeichen 3 gekennzeichnet. Bei einem Betrieb der Brennkraftmaschine wird auf der anströmseitigen Oberseite der Filtertasche 3 Ruß aus dem Abgasstrom abgeschieden. Dieser akkumuliert über die Betriebsdauer des Dieselmotors sukzessive auf den anströmseitigen Oberflächen der Filtertaschen 3. Es versteht sich, dass zwar mit sukzessiver Rußbeladung des Partikelfilters 2 der Abgasgegendruck steigt, dass jedoch die akkumulierte Rußschicht nach wie vor abgasdurchströmbar ist.

Stromab des in der Figur nicht dargestellten Dieselmotors und stromauf zu dem Partikelfilter 2 ist ein Port 4 in den Abgasstrang 1 eingebracht. Über den Port 4 kann in den Abgasstrang ein Stoff eingetragen werden. Der Port 4 umfasst eine im Abgasstrang befindliche Düse 5, deren Zuleitung aus dem Abgasstrang 1 herausgeführt ist. Eingeschaltet in die Zuführleitung 6 ist eine Dosierpumpe 7, die eingangsseitig in nicht näher dargestellte Art und Weise an ein Vorratsbehältnis zum Bevorraten des in den Abgasstrom einzudüsenden Mittels angeschlossen ist. In Förderrichtung der Dosierpumpe 7 nachgeschaltet mündet in die Zuführleitung 6 eine Luftzuführleitung 8. In diese kann, wenn gewünscht, ein Ventil eingeschaltet sein (in der Figur nicht dargestellt). Somit kann beim Betrieb der Dosierpumpe 7 das geförderte Mittel luftangereichert in den Abgasstrang 1 eingebracht werden.

Bei dem in Figur 1 dargestellten Ausschnitt einer Abgasreinigungsanlage dient der Port 4 und die damit in Zusammenhang stehenden Aggregate, um einen Katalysator-Precursor dem durch den Abgasstrang 1 strömenden Abgasstrom beizumengen. Der sich aus dem Precursor bildende Katalysator dient zum Absenken der Zündtemperatur des auf dem Partikelfilter 2 akkumulierten Rußes. Bei dem dargestellten Ausführungsbeispiel wird über den Port in Toluol gelöstes Ferrocen bei einem Betrieb des Dieselmotors und somit in das in den Abgasstrang 1 strömende Abgas, wie durch den Blockpfeil in Figur 1 schematisiert dargestellt, beigemengt. Begünstigt durch die bei einem Betrieb des Dieselmotor im Abgasstrang 1 herrschenden Temperaturen (z.B. bei 270°C bis 300°C) verdampft das aus der Düse 5 zerstäubt in den Abgasstrang 1 eingebrachte Toluol quasi sofort, sodass bereits nach kurzer Strömungsstrecke des zugeführten Katalysator-Precursors im Abgasstrom kleine Ferrocenpartikel mitgeführt werden. Das Ferrocen geht, bedingt durch die Temperatur im Abgasstrang 1 und unterstützt durch seine sich bereits bei relativ niedrigen Temperaturen einstellende Sublimation, von seinen festen Zustand in seine Gasphase über, sodass anschließend im Abgasstrom in Gasphase befindliches Ferrocen mitgeführt wird. Die in Figur 1 dargestellte Anordnung ist dergestalt hinsichtlich ihrer Länge betreffend die Strömungsstrecke des Abgases bemessen, dass bei einem Zudüsen von gelöstem Ferrocen bei einem Betrieb des Dieselmotors das Ferrocen in seine Gasphase überführt worden ist, bevor dieses an den Partikelfilter 2 gelangt. Allein zur Verdeutlichung der Wirkungsweise sind in der Figur die in den Abgasstrang 1 eingebrachten Tröpfchen und die nach Verdampfen des Toluols vorhandenen Festkörperpartikel unmaßstäblich groß gezeichnet. Tatsächlich wird die Flüssigkeit durch die Düse 5 in kleinste Tröpfchen zerstäubt. Zur Unterstützung dieses Zerstäubungsprozesses dient die durch die Luftzuführleitung 8 in den durch die Dosierpumpe 7 geförderten Flüssigkeitsstrom eingebrachte Luft.

Bei einem Betrieb zum Zuführen des Katalysator-Precursors über den Port 4 in den Abgasstrom wird die auf der anströmseitigen Oberfläche des Partikelfilter 2 akkumulierte Rußschicht dem in dem Abgasstrom enthaltenen gasförmigen Ferrocen ausgesetzt. Der akkumulierte Ruß wirkt als Aktivkohlefilter und adsorbiert das in Gasphase befindliche Ferrocen. Da die auf der anströmseitigen Oberfläche des Partikelfilters 2 befindliche Rußschicht in jeder anströmseitige Filtertasche 3 abgasdurchströmt ist, wird auf diese Weise gasförmiges Ferrocen in die gesamte Rußschicht gebracht, und zwar bis zu den unmittelbar auf der Filteroberfläche des Partikelfilters 2 befindliche Rußpartikeln.

Im Abgasstrom wird ebenfalls Sauerstoff transportiert. Daher bildet sich aus dem von dem Ruß absorbierten gasförmigen Ferrocen ein Eisenoxid, welches einen Katalysator zum Herabsetzen der Aktivierungsenergie der für eine Filterregeneration notwendige Rußoxidation darstellt. Wurde in hinreichender Menge gasförmiges Ferrocen in den akkumulierten Ruß eingebracht und hat sich das katalytische Eisenoxid gebildet, kann eine Regeneration des Partikelfilters 2 ausgelöst werden, und zwar bei deutlich geringeren Temperaturen, verglichen mit der Zündtemperatur von Ruß ohne einen solchen Katalysatorzusatz.

Von Besonderheit bei dem beschriebenen Verfahren ist, dass der zum Senken der Oxidationstemperatur von Ruß notwendige Katalysator *in situ* gebildet wird, und zwar dort, wo der Katalysator tatsächlich benötigt wird. Würde der Katalysator in seiner Oxidform im Abgasstrom mitgeführt werden, würde sich dieser nur auf der obersten Rußschicht ablagern, nicht jedoch zu den darunter liegenden Rußpartikeln vordringen können.

Die vorbeschriebene Wirkungsweise erlaubt, dass für die Zwecke der Regeneration des Partikelfilters 2 erst kurz vor einer vorgesehenen Regeneration, beispielsweise wenn eine hinreichende Rußbeladung festgestellt worden ist, der Katalysator-Precursor in den Abgasstrang 1 über den Port 4 eingebracht wird. Die in den Abgasstrang 1 über eine gewisse Zeitspanne hinweg eingebrachte Katalysator-Precursormenge ist so bemessen, dass der sich daraus bildende Katalysator ausreicht, um den gesamten, auf den Partikelfilter 2 akkumulierten Ruß hinsichtlich seiner Oxidationstemperatur abzusenken. Letztendlich entspricht diese Menge derjenigen Menge, die bei einem kontinuierlichen Zugeben eines Katalysator-Precursors über die gesamte Betriebsdauer des Dieselmotors zwischen zwei Regenerationsperioden zugegeben werden müsste.

Aufgrund der besonderen Eigenschaften des zu Figur 1 beschriebenen Verfahrens ist ein diskontinuierliches Einbringen des Katalysator-Precursors möglich, wodurch die benötigte Katalysatormenge in Form des Precursors aufgrund der kurzen Zeitspanne, in der die für den gesamten Rußkuchen benötigte Katalysator-Precursormenge zugeführt wird, in einer sehr viel größeren Menge dosiert werden kann. Ein Dosieren größerer Mengen ist hinsichtlich der Anforderungen an die für die Dosierung notwendigen Systeme erheblich geringer, mithin die Dosierung sehr viel genauer und daher effektiver.

Es versteht sich, dass zum Durchführen des Verfahrens anstelle des in dem Ausführungsbeispiel beschriebenen flüssigen Katalysator-Precursors dieser auch in fester Form dem Abgasstrang beigemengt werden kann. Gleichfalls ist es möglich, einen Katalysator-Precursor in Gasform zuzuführen, beispielsweise gasförmiges Ferrocen.

Die Erfindung ist anhand eines Ausführungsbeispiels beschrieben worden. Das beanspruchte Verfahren lässt sich ebenso in Abgasreinigungsanlagen einsetzen, bei denen zusätzliche Aggregate vorgesehen sind, beispielsweise um die Temperatur im Abgasstrang zu erhöhen oder andere, im Zusammenhang mit einer Abgasreinigungsanlage eingesetzte Komponenten.

### Bezugszeichenliste

- 1: Abgasstrang
- 2: Partikelfilter
- 3: Filtertasche
- 4: Port
- 5: Düse
- 6: Zuführleitung
- 7: Dosierpumpe
- 8: Luftzuführleitung

## Patentansprüche

1. Verfahren zum Absenken der Zündtemperatur von auf einem in dem Abgasstrang (1) einer Brennkraftmaschine eingeschalteten Partikelfilter (2) akkumuliertem Ruß, bei welchem Verfahren ein Precursor eines die Zündtemperatur von Ruß herabsetzenden Katalysators der Brennkraftmaschine nachgeschaltet und stromauf des Partikelfilters (2) in den Abgasstrang (1) eingebracht wird, **dadurch gekennzeichnet, dass** der in dem Abgasstrang (1) eingebrachte Precursor innerhalb des Abbgasstranges in seine Gasphase überführt wird, und zwar bevor dieser den auf dem Partikelfilter (2) akkumulierten Ruß beaufschlagt, welcher gasförmige Katalysator-Precursor von dem auf den Partikelfilter (2) akkumulierten Ruß adsorbiert und aus welchem Katalysator-Precursor anschließend in Reaktion mit zumindest einem im Abgasstrom enthaltenen, weiteren gasförmigen Bestandteil der für die Herabsetzung der Zündtemperatur verantwortliche Katalysator gebildet wird.

2. Verfahren nach Anspruch 1, **dadurch gekennzeichnet, dass** als Katalysator ein Oxid verwendet wird, welches sich aus dem in Gasphase befindlichem Precursor und von im Abgasstrom enthaltenem Sauerstoff bildet.

3. Verfahren nach Anspruch 1 oder 2, **dadurch gekennzeichnet, dass** zum Überführen des in dem Abgasstrang eingebauten Precursors in seine Gasphase der Precursor über eine gewisse Verweildauer im Abgasstrom mitgeführt wird.

4. Verfahren nach einem der Ansprüche 1 bis 3, **dadurch gekennzeichnet, dass** als Precursor in den Abgasstrang (1) ein Stoff eingebracht wird, dessen Dampfdruck ein Wechsel des Aggregatzustandes in die Gasphase begünstigt.

5. Verfahren nach einem der Ansprüche 1 bis 4, **dadurch gekennzeichnet, dass** der Precursor in gelöster Form oder gasförmig in den Abgasstrang (1) eingebracht wird.

6. Verfahren nach einem der Ansprüche 1 bis 5, **dadurch gekennzeichnet, dass** in den Abgasstrom als Precursor gelöstes oder gasförmiges Ferrocen eingebracht wird.

7. Verfahren nach einem der Ansprüche 1 bis 6, **dadurch gekennzeichnet, dass** das Verfahren im Rahmen eines Verfahrens zum Regenerieren eines in dem Abgasstrang (1) einer Brennkraftmaschine eingeschalteten Partikelfilters (2) mit hinreichendem zeitlichen Vorlauf vor einer vorgesehenen Regeneration durchgeführt wird, damit sich der Katalysator aus dem Precursor in Verbindung mit einem weiteren gasförmigen Bestandteil im Abgasstrom gebildet hat.

8. Verfahren nach Anspruch 7, **dadurch gekennzeichnet, dass** die Beimengung des Precursors beendet ist, bevor der Regenerationsprozess startet oder ausgelöst wird.
